(19) Europäisches Patentamt / European Patent Office / Office européen des brevets

(11) **EP 4 559 698 B1**

(12) **EUROPEAN PATENT SPECIFICATION**

(45) Date of publication and mention
of the grant of the patent:
**04.03.2026   Bulletin 2026/10**

(21) Application number: 24208339.2

(22) Date of filing: 23.10.2024

(51) International Patent Classification (IPC):
*B60C 3/04* $^{(2006.01)}$      *B60C 9/28* $^{(2006.01)}$

(52) Cooperative Patent Classification (CPC):
**B60C 3/04; B60C 9/28;** Y02T 10/86

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  22.11.2023   JP 2023198537

(43) Date of publication of application:
**28.05.2025   Bulletin 2025/22**

(73) Proprietor: **Sumitomo Rubber Industries, Ltd.
Kobe-shi, Hyogo 651-0072 (JP)**

(72) Inventor: **NINOMIYA, Hiroaki
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**DE-T5- 112022 000 645      JP-A- 2022 153 347
US-A1- 2022 016 929      US-A1- 2022 055 407**

**Description**

RELATED APPLICATIONS

This application claims the benefit of foreign priority to Japanese Patent Applications No. JP2023-198537, filed November 22, 2023.

FIELD OF THE INVENTION

The present invention relates to a pneumatic tire having a tread portion.

BACKGROUND OF THE INVENITON

Conventionally, small-diameter pneumatic tires suitable for use on small shuttle buses and the like are known. Japanese unexamined patent application publication No. 2023-102627 (Patent Document 1) has proposed a pneumatic tire with improved durability performance in bead portions, where strain is concentrated due to the small diameter, for example. Related technologies are known from DE 11 2022 000645 T5 and JP 2022 153347 A.

SUMMARY OF THE INVENTION

However, small-diameter pneumatic tires used for heavy vehicles such as those described in the Patent Document 1 have a short ground contact length and a wide ground contact width, i.e., a so-called wide ground contact patch shape, and there has been room for improvement in ride comfort performance due to issues such as the dispersion of road surface input, input sensitivity, and frequency.

The present invention was made in view of the above, and a primary object thereof is to provide a wide, small-diameter pneumatic tire capable of improving the ride comfort performance. The present invention is set out in the appended claims.

The present invention is a pneumatic tire according to claim 1.

It is possible that the pneumatic tire of the present invention improves ride comfort performance by having the configuration described above.

BRIEF DESCRIPTION OF THE DRAWINGS

FIG. 1 is a cross-sectional view of a pneumatic tire according to an embodiment of the present invention.

FIG. 2 is an enlarged cross-sectional view of the tread portion.

DETAILED DESCRIPTION OF THE INVENTION

An embodiment of the present invention will now be described in conjunction with accompanying drawings.

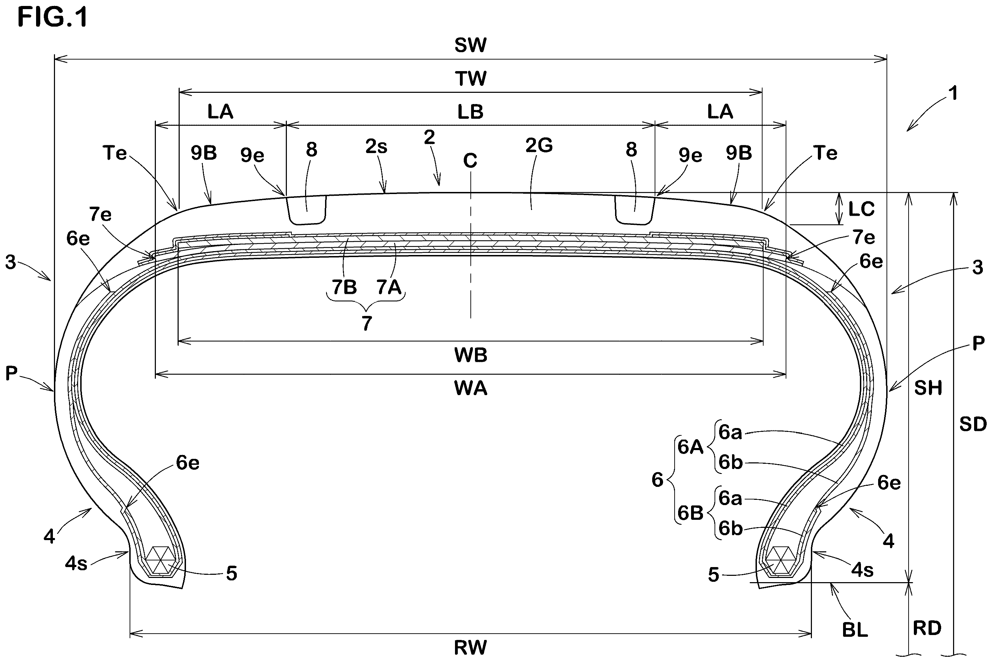

FIG. 1 is a tire meridian section of a pneumatic tire 1 according to the present embodiment in a standard state. The term "standard state" refers to a state in which the pneumatic tire 1 is mounted on a standard rim, inflated to a standard inner pressure, and loaded with no tire load. Hereafter, unless otherwise mentioned, dimensions and the like of various parts of the pneumatic tire 1 are the values measured in this standard state.

In the presence of a standardization system including a standard on which the pneumatic tire 1 is based, the term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO. In the absence of the standardization system including the standard on which the pneumatic tire 1 is based, the "standard rim" is a rim with the smallest rim diameter RD and the smallest rim width RW among rims that can be assembled with the pneumatic tire 1 and do not cause air leakage.

In the presence of a standardization system including a standard on which the pneumatic tire 1 is based, the "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO. In the absence of the standardization system including the standard on which the pneumatic tire 1 is based, the "standard inner pressure" is an air pressure set by the manufacturer and the like for each tire.

As shown in FIG. 1, the pneumatic tire 1 in the present embodiment has a small diameter and has a so-called wide ground contact surface shape with a short ground contact length and a wide ground contact width. When used in small buses and low-floor electric vehicles, the pneumatic tire 1 configured as such can increase the interior space of the vehicle and the space inside the rim, and thus can improve transportation efficiency and accommodating larger brakes, larger in-wheel motors, and the like.

It is preferred that the pneumatic tire 1 has an outer diameter SD from 350 to 600 mm. Since the outer diameter SD of the pneumatic tire 1 is 350 mm or more, the space inside the rim can be secured. The outer diameter SD of the pneumatic tire 1 is 600 mm or less, which helps to increase the interior space of a small bus, a low-floor electric vehicle, and the like.

The rim width RW of the rim on which the pneumatic tire 1 is mounted is from 78% to 99% of a tire section width SW. The rim width RW is the width between a pair of outer surfaces (4s) in the tire axial direction at radially inner portions of the pneumatic tire 1 in the standard state.

Since the rim width RW is 78% or more of the tire section width SW, a large volume can be secured for the tire inner cavity, which helps to improve the ride comfort performance. The rim width RW is 99% or less of the tire section width SW, which helps to support heavy loads such as small buses and low-floor electric vehicles.

The pneumatic tire 1 has a tread portion 2, a pair of sidewall portions 3, and a pair of bead portions 4. The sidewall portions 3 are portions extending radially inward from the tread portion 2 on both sides in the tire axial direction, for example. The bead portions 4 are the portions located radially inside the sidewall portions 3, for example.

Each of the bead portions 4 has an annular bead core 5 extending in the tire circumferential direction, for example. The bead core 5 is formed from steel wires, for example. Here, the above-mentioned outer surfaces (4s) in the tire axial direction at the radially inner portions of the pneumatic tire 1 are the outer surfaces (4s) in the tire axial direction of the bead portions 4.

It is preferred that the pneumatic tire 1 includes a carcass 6 extending between the bead portions 4 and a belt layer 7 arranged in the tread portion 2. The tread portion 2 in the present embodiment includes a tread rubber 2G forming a ground contact surface (2s), the belt layer 7 disposed radially inside the tread rubber 2G, and the carcass 6 disposed radially inside the belt layer 7.

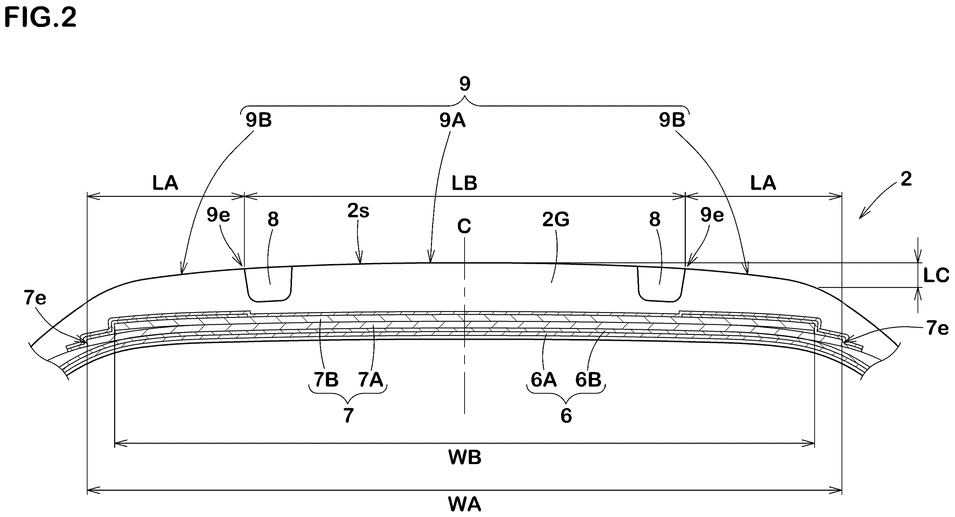

FIG. 2 is an enlarged cross-sectional view of the tread portion 2. As shown in FIG. 2, the ground contact surface (2s) is divided into a plurality of land regions 9 by at least two circumferential grooves 8, two circumferential grooves 8 in the present embodiment, each extending continuously and linearly in the tire circumferential direction on the tread portion 2. It should be noted that the number of the circumferential grooves 8 is not limited to two, but it is preferred that the tread portion 2 is provided with 2 to 4 circumferential grooves 8 in order to ensure a sufficient ground contacting area of the land regions 9 for supporting a heavy load.

The land regions 9 include at least a crown land region 9A located on the axially inner side (on the tire equator (C) in the present embodiment), and a pair of shoulder land regions 9B each located on the axially outermost side among the land regions 9 in a respective axial half of the pneumatic tire 1, ie., one shoulder land region 9B on each axially outermost side, for example. Each of the shoulder land regions 9B in the present embodiment has an inner edge (9e) in the tire axial direction.

Each of the inner edges (9e) in the present embodiment is located axially inside a respective one of outer edges (7e) in the tire axial direction of the belt layer 7. Since the shoulder land regions 9B configured as such are reinforced by the belt layer 7, the shoulder land regions 9B can exhibit high rigidity and thus are suitable for supporting heavy loads.

As shown in FIG. 1 and FIG.2, in each axial half of the pneumatic tire 1, it is preferred that a distance LA in the tire axial direction between the inner edge (9e) and outer edges (7e) axially adjacent to each other is from 10% to 30% of a maximum belt width WA in the tire axial direction of the belt layer 7.

In each axial half of the pneumatic tire 1, since the distance LA between the inner edge (9e) and the outer edge (7e) is 10% or more of the maximum belt width WA, the rigidity of each shoulder land region 9B is increased, which makes it possible to support heavy loads. Since the distance LA between the inner edge (9e) and the outer edge (7e) is 30% or less of the maximum belt width WA in each axial half of the pneumatic tire 1, the rigidity of each shoulder land region 9B is prevented from becoming excessively large, therefore, it is possible that the ride comfort performance during cornering is improved.

A hardness (Hs) of the tread rubber 2G in the present embodiment satisfies the following Expression 1.

$$Hs \leq 75 - 20 \times \frac{LA}{SW} \cdots \text{(Expression 1)}$$

where LA is the distance in millimeters between the inner edge (9e) and the outer edge (7e) in an axial half of the pneumatic tire, and

SW is the tire section width in millimeters.

Here, the hardness (Hs) of the tread rubber 2G is a hardness measured by a type-A durometer in an environment of 23 degrees Celsius in accordance with Japanese Industrial Standard JIS-K6253. It should be noted that the tire section width SW is a distance in the tire axial direction between a pair of tire maximum width positions (P) in the tire profile excluding convexities that protrude locally from the tire surface.

The hardness (Hs) of the tread rubber 2G has an upper limit set in relation to the structural rigidity of the shoulder land regions 9B according to Expression (1). The tread rubber 2G configured as such can reinforce the shoulder land regions 9B when the structural rigidity is low, and can mitigate the impact force acting on the shoulder land regions 9B when the structural rigidity is high. Thereby, it is possible that the pneumatic tire 1 in the present embodiment improves the ride comfort performance for a wide, small-diameter tire capable of supporting a heavy load.

In a more preferred embodiment, the outer edge (7e) of the belt layer 7 is positioned axially outside a tread edge (Te) in each axial half of the pneumatic tire 1. In other words, it is preferred that the maximum belt width WA is larger than a tire tread width TW. The belt layer 7 configured as such can increase the rigidity of the entire ground contact surface (2s) of the tread portion 2 and is suitable for supporting high loads.

Here, the tread edges (Te) are the axially outermost ground contacting positions of the pneumatic tire 1 when the pneumatic tire 1 in the standard state is in contact with a flat surface with zero camber angle by being loaded with 70% of a standard tire load. Further, the tire tread width TW is the distance in the tire axial direction between a pair of the tread edges (Te). It should be noted that the center position in the axial direction between the tread edges (Te) is the tire equator (C). In the present embodiment, the tire equator (C) is located at the outermost position in the tire radial direction.

In the case where a standard included in a standardization system on which the pneumatic tire 1 is based has been established, the term "standard tire load" refers to a tire load specified for the concerned tire by the standard, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. In the case where the standard included in the standardization system on which the pneumatic tire 1 is based has not been established, the standard tire load is the maximum load that can be applied to the pneumatic tire 1 and is determined by the manufacturer and the like.

It is preferred that each of the shoulder land regions 9B comes into contact with a flat plane when the pneumatic tire 1 is placed on the flat plane with zero camber angle by being loaded with 50% of the standard tire load. In the pneumatic tire 1 configured as such, the shoulder land regions 9B are in contact with the ground even when the load is relatively small, such as when a small bus is empty (i.e., no passengers), therefore, it is possible that uneven wear of the tread portion 2 is suppressed.

It is preferred that a camber amount LC at the outer edges (7e) in the tire axial direction is in the range from 2.5% to 12.5% of the maximum belt width WA. It should be noted that the camber amount LC at the positions of the outer edges (7e) is the distance in the tire radial direction between the tire equator (C) and the radial position of the outer edges (7e) in the tire profile.

Since the camber amount LC is 2.5% or more of the maximum belt width WA, the impact on the shoulder land regions 9B at the time of contact with the ground is mitigated, thereby, it is possible that the ride comfort performance is improved. Since the camber amount LC is 12.5% or less of the maximum belt width WA, the shoulder land regions 9B can be brought into contact with the ground even when the load applied is relatively small, therefore, it is possible that the uneven wear of the tread portion 2 is suppressed.

It is preferred that a distance LB in the tire axial direction between the inner edges (9e) of the shoulder land regions 9B is in the range from 25% to 95% of the maximum belt width WA. Since the distance LB between the inner edges (9e) is 25% or more of the maximum belt width WA, the shoulder land regions 9B are prevented from becoming excessively large, thereby, it is possible that the ride comfort performance during cornering is improved. Since the distance LB between the inner edges (9e) is 95% or less of the maximum belt width WA, the rigidity of the shoulder land regions 9B can be maintained, which makes it suitable for supporting heavy loads.

The belt layer 7 includes at least one, preferably two or more belt plies, and two belt plies 7A and 7B in the present embodiment. The belt plies 7A and 7B include a first belt ply 7A disposed on an inner side in the tire radial direction, and a second belt ply 7B disposed radially outside the first belt ply 7A, for example. The outer edges (7e) of the belt layer 7 in the present embodiment are the outer edges (7e) in the tire axial direction of the first belt ply 7A. The belt layer 7 configured as such can increase the rigidity of the tread portion 2 and is suitable for supporting a high load.

The belt plies 7A and 7B include belt cords (not shown) made of steel cords, for example. The belt cords may be single steel wires or may be stranded wires made of multiple steel filaments twisted together, for example.

The belt cords are arranged at an angle of 10 to 30 degrees with respect to the tire circumferential direction, for example. It is preferred that the belt cords of the first belt ply 7A are inclined to a side opposite to the belt cords of the second belt ply 7B with respect to the tire circumferential direction.

The belt layer 7 configured as such increases the rigidity of the tread portion 2 in a good balance, therefore, both the rigidity capable of supporting a heavy load and good ride comfort performance can be achieved. It should be noted that the angle of the belt cords mentioned above is the angle when the pneumatic tire 1 is in the standard state, which can be checked by partially peeling off the tread portion 2, for example.

The belt layer 7 includes an outermost belt ply disposed radially outermost among the belt plies. The outermost belt ply in the present embodiment is the second belt ply 7B. When the belt layer 7 includes only one belt ply 7A, for example, the first belt ply 7A is the outermost belt ply.

It is preferred that a belt width WB in the tire axial direction of the outermost belt ply is in the range from 80% to 100% of the maximum belt width WA. The belt layer 7 configured as such can achieve both the rigidity and weight reduction of the tread portion 2, and is useful for improving the ride comfort performance in a wide, small-diameter tire capable of supporting a heavy load.

As shown in FIG. 1, the carcass 6 includes at least one carcass ply, and two carcass plies 6A and 6B in the present embodiment. The two carcass plies 6A and 6B include a first carcass ply 6A disposed on an inner side in the tire radial direction and a second carcass ply 6B disposed radially outside the first carcass ply 6A in the tread portion 2, for example.

It is preferred that at least one of the carcass plies 6A and 6B includes a main body portion (6a) extending from the bead core 5 of one of the bead portions 4 to the bead core 5 of the other one of the bead portions 4 via the tread portion 2 and the sidewall portions 3, and turned up portions (6b) each turned up around a respective one of the bead cores 5 from the inside to the outside in the tire axial direction. Each of the first carcass ply 6A and the second carcass ply 6B in the present embodiment includes the main body portion (6a) and the turned up portions (6b).

It is preferred that at least one of the carcass plies 6A and 6B has outer ends (6e) in the tire radial direction of the turned up portions (6b) positioned radially outside the tire maximum width positions (P) where the tire section width SW is at its maximum.

In the present embodiment, the outer ends (6e) of the turned up portions (6b) of the first carcass ply 6A are located radially outward of the tire maximum width positions (P), and the outer ends (6e) of the turned up portions (6b) of the second carcass ply 6B are located radially inward of the tire maximum width positions (P). The carcass 6 configured as such can achieve both the rigidity and the weight reduction of the sidewall portions 3, and is useful for improving the ride comfort performance for a wide, small-diameter tire capable of supporting a heavy load.

The carcass plies 6A and 6B include carcass cords (not shown) made of organic fiber cords, for example. Examples of the organic fiber cords include cords made of one type of fibers or hybrid fibers made of two or more types of fibers selected from the group consisting of polyethylene terephthalate fiber, polyethylene naphthalate fiber, nylon fiber, aramid fiber, and rayon fiber, for example.

It is preferred that the carcass cords are arranged at an angle from 25 to 90 degrees with respect to the tire circumferential direction. It should be noted that the above-mentioned angle of the carcass cords is the angle when the pneumatic tire 1 is in the standard state, and can be confirmed by partially peeling off the tread portion 2, for example.

When the carcass cords are inclined at an angle of less than 90 degrees with respect to the tire circumferential direction, it is preferred that the carcass cords of the first carcass ply 6A and the carcass cords of the second carcass ply 6B are inclined to opposite sides to each other with respect to the tire circumferential direction. The carcass 6 may have a bias structure, for example.

Tire section width SW is in the range from 145 to 285 mm. Since the tire section width SW is 145 mm or more, a large volume can be ensured in the tire inner cavity, thereby, it is possible that the ride comfort performance is improved. Since the tire section width SW is 285 mm or less, the tire weight is prevented from becoming excessively large, therefore, the ride comfort performance can be improved.

A ratio SH/SW of a tire section height SH to the tire section width SW is in the range from 35% to 75%. Since the ratio SH/SW is 35% or more, a large volume can be secured in the tire inner cavity, thereby, it is possible that the ride comfort performance is improved. Since the ratio SH/SW is 75% or less, excessive increase in the tire weight is suppressed, therefore, it is possible that the ride comfort performance is improved. It should be noted that the tire section height SH is a height in the tire radial direction from a bead base line BL to the tire equator (C). Further, the bead base line BL is an imaginary line that corresponds to the rim diameter RD. It should also be noted that the ratio SH/SW is a value generally known as the aspect ratio.

It is preferred that the rim width RW of the rim on which the pneumatic tire 1 is mounted is 9 inches or less. The pneumatic tire 1 configured as such suppresses the size of the rim, prevents the rim weight from becoming excessively large, and thus helps to improve the ride comfort performance.

It is preferred that the rim diameter RD of the rim on which the pneumatic tire 1 is mounted is in the range from 10 to 18 inches. Since the rim diameter RD is 10 inches or more, it is possible that the space inside the rim is ensured. Since the rim diameter RD is 18 inches or less, excessive increase in the rim weight and the tire weight can be prevented, therefore, it is possible that the ride comfort performance is improved.

While detailed description has been made of the pneumatic tire according to an especially preferred embodiment of the present invention, the present invention can be embodied in various forms without being limited to the illustrated embodiment. The present invention is only limited by the scope of the appended claims.

[Examples]

Pneumatic tires having the basic structure shown in FIG. 1 were made by way of test according to the specifications in Table 1. The ride comfort performance of the test pneumatic tires was evaluated. The main common specifications and test methods are as follows.

< Common Specifications >

Tire size: 205/40R15
Rim size: 15x7.0J
Tire inner pressure: 350 kPa
Test vehicle: small bus

< Grip Performance >

The test tires were mounted on the test vehicle, and then a test driver evaluated the ride comfort performance based on a sensory perception of the test driver while the test driver alone drove the test vehicle on a dry asphalt road of a test course. The test results are indicated by an index based on Reference 1 being 100, wherein the higher the numerical value, the better the ride comfort performance is.

The test results are shown in Table 1.

Table 1

|  | Ref. 1 | Ref. 2 | Ref. 3 | Ex.1 | Ex.2 | Ex.3 | Ex.4 | Ex.5 |
|---|---|---|---|---|---|---|---|---|
| Rim width RW / Tire section width SW [%] | 80 | 80 | 80 | 80 | 80 | 80 | 90 | 80 |
| Distance LA / Maximum belt width WA [%] | 11 | 11 | 33 | 11 | 22 | 11 | 11 | 11 |
| Distance LA / Tire section width WA [%] | 10 | 10 | 30 | 10 | 20 | 10 | 10 | 10 |
| Hardness (Hs) of Tread rubber [degree] | 75 | 80 | 65 | 65 | 65 | 70 | 65 | 65 |
| Camber amount LC / Maximum belt width WA [%] | 11 | 11 | 11 | 11 | 11 | 11 | 11 | 6 |
| Ride comfort performance [index] | 100 | 98 | 100 | 104 | 106 | 102 | 104 | 102 |

From the test results, it was confirmed that the pneumatic tires in Examples had superior ride comfort performance compared to the pneumatic tires in References, and that the ride comfort performance can be improved for the pneumatic tires in the Examples as the wide, small-diameter tires capable of supporting high loads.

[Description of Reference Signs]

1 pneumatic tire

2 tread portion

2G tread rubber

2s ground contact surface

7 belt layer

7e outer edge

8 circumferential groove

9 land region

9B shoulder land region

9e inner edge

**Claims**

1. A pneumatic tire (1) having a tread portion (2), wherein

the tread portion (2) includes a tread rubber (2G) forming a ground contact surface (2s) and a belt layer (7) disposed radially inside the tread rubber (2G) and having outer edges (7e) in the tire axial direction,
the pneumatic tire (1) has an outer diameter from 350 to 600 mm and is configured to be mountable on a tire rim having a rim width RW from 78% to 99% of a tire section width SW of the pneumatic tire (1),
the ground contact surface (2s) is divided into a plurality of land regions (9) by at least two circumferential grooves (8) extending continuously and linearly in a tire circumferential direction,
the land regions (9) include a pair of shoulder land regions (9B) each located on a respective axially outermost side,
each of the shoulder land regions (9B) includes an inner edge (9e) in the tire axial direction,
in an axial half of the pneumatic tire (1), the inner edge (9e) of the shoulder land region (9B) is located axially inside the outer edge (7e) of the belt layer (7),
in an axial half of the pneumatic tire (1), a distance LA in the tire axial direction between the inner edge (9e) of the shoulder land region (9B) and the outer edge (7e) of the belt layer (7) is in the range from 10% to 30% of a maximum belt width WA in the tire axial direction of the belt layer (7),
where LA is a distance in millimeters between the inner edge (9e) of the shoulder land region (9B) and the outer edge (7e) of the belt layer (7) in an axial half of the pneumatic tire (1), and
**characterized in that**
a hardness Hs of the tread rubber (2G) satisfies the following Expression 1:

$$Hs \leq 75 - 20 \times \frac{LA}{SW} \cdots \text{(Expression 1)},$$

wherein SW is the tire section width in millimeters and Hs is measured by a type-A durometer in an environment of 23 degrees Celsius in accordance with Japanese Industrial Standard JIS-K6253;
the tire section width SW is in the range from 145 to 285 mm;
a ratio SH/SW of a tire section height SH to the tire section width SW is in the range from 35% to 75%.

2. The pneumatic tire according to claim 1, wherein the tread portion (2) is provided with two to four circumferential grooves (8).

3. The pneumatic tire according to any one of claims 1 to 2, wherein the rim width RW is 9 inches or less.

4. The pneumatic tire according to any one of claims 1 to 3, wherein the pneumatic tire (1) is configured to be mountable on the tire rim having a rim diameter RD in the range from 10 to 18 inches.

5. The pneumatic tire according to any one of claims 1 to 4, wherein a distance LB in the tire axial direction between the inner edges (9e) of the shoulder land regions (9B) is in the range from 25% to 95% of the maximum belt width WA.

6. The pneumatic tire according to any one of claims 1 to 5, wherein the belt layer (7) includes an outermost belt ply (7B) disposed outermost in the tire radial direction, and
a belt width WB in the tire axial direction of the outermost belt ply (7B) is in the range from 80% to 100% of the maximum belt width WA.

7. The pneumatic tire according to any one of claims 1 to 6, wherein a camber amount LC at the outer edges (7e) of the belt layer (7) is in the range from 2.5% to 12.5% of the maximum belt width WA.

8. The pneumatic tire according to any one of claims 1 to 7, wherein both of the shoulder land regions (9B) are configured to be in contact with a plane when the pneumatic tire (1) is placed on the plane with zero camber angle by being loaded with 50% of a standard tire load.

**Patentansprüche**

1. Luftreifen (1) mit einem Laufflächenabschnitt (2), wobei

der Laufflächenabschnitt (2) einen Laufflächengummi (2G), der eine Bodenkontaktfläche (2s) bildet, und eine Gürtellage (7) umfasst, die radial innen von dem Laufflächengummis (2G) angeordnet ist und Außenkanten (7e) in der Reifenaxialrichtung aufweist,

der Luftreifen (1) einen Außendurchmesser von 350 bis 600 mm aufweist und so konfiguriert ist, dass er auf eine Reifenfelge aufziehbar ist, die eine Felgenbreite RW von 78 % bis 99 % einer Reifenquerschnittsbreite SW des Luftreifens (1) aufweist,

die Bodenkontaktfläche (2s) durch mindestens zwei Umfangsrillen (8), die sich kontinuierlich und linear in einer Umfangsrichtung des Reifens erstrecken, in eine Vielzahl von Landbereichen (9) unterteilt ist,

die Landbereiche (9) ein Paar Schulterlandbereiche (9B) umfassen, die sich jeweils auf einer jeweiligen axial äußersten Seite befinden,

jeder der Schulterlandbereiche (9B) eine Innenkante (9e) in der Reifenaxialrichtung umfasst,

in einer axialen Hälfte des Luftreifens (1) die Innenkante (9e) des Schulterlandbereichs (9B) sich axial innen von der Außenkante (7e) der Gürtellage (7) befindet,

in einer axialen Hälfte des Luftreifens (1) ein Abstand LA in der Reifenaxialrichtung zwischen der Innenkante (9e) des Schulterlandbereichs (9B) und der Außenkante (7e) der Gürtellage (7) im Bereich von 10 % bis 30 % einer maximalen Gürtelbreite WA in der Reifenaxialrichtung der Gürtellage (7) liegt,

wobei LA ein Abstand in Millimetern zwischen der Innenkante (9e) des Schulterlandbereichs (9B) und der Außenkante (7e) der Gürtellage (7) in einer axialen Hälfte des Luftreifens (1) ist, und

**dadurch gekennzeichnet, dass**

eine Härte Hs des Laufflächengummis (2G) den folgenden Ausdruck 1 erfüllt:

$$Hs \leq 75 - 20 \times \frac{LA}{SW} \cdots \text{ (Ausdruck 1)},$$

wobei SW die Reifenquerschnittsbreite in Millimetern ist und Hs mit einem Durometer Typ A in einer Umgebung von 23 Grad Celsius gemäß der japanischen Industrienorm JIS-K6253 gemessen ist;

die Reifenquerschnittsbreite SW im Bereich von 145 bis 285 mm liegt;
ein Verhältnis SH/SW einer Reifenquerschnittshöhe SH zur Reifenquerschnittsbreite SW im Bereich von 35 % bis 75 % liegt.

2. Luftreifen nach Anspruch 1, wobei der Laufflächenabschnitt (2) mit zwei bis vier Umfangsrillen (8) versehen ist.

3. Luftreifen nach einem der Ansprüche 1 bis 2, wobei die Felgenbreite RW 9 Zoll oder weniger beträgt.

4. Luftreifen nach einem der Ansprüche 1 bis 3, wobei der Luftreifen (1) so konfiguriert ist, dass er auf die Reifenfelge aufziehbar ist, die einen Felgendurchmesser RD im Bereich von 10 bis 18 Zoll aufweist.

5. Luftreifen nach einem der Ansprüche 1 bis 4, wobei ein Abstand LB in der Reifenaxialrichtung zwischen den Innenkanten (9e) der Schulterlandbereiche (9B) im Bereich von 25 % bis 95 % der maximalen Gürtelbreite WA liegt.

6. Luftreifen nach einem der Ansprüche 1 bis 5, wobei die Gürtellage (7) eine am weitesten außen liegende Gürtellage (7B) umfasst, die am weitesten außen in der Reifenradialrichtung angeordnet ist, und eine Gürtelbreite WB in der Reifenaxialrichtung der am weitesten außen liegenden Gürtellage (7B) im Bereich von 80 % bis 100 % der maximalen Gürtelbreite WA liegt.

7. Luftreifen nach einem der Ansprüche 1 bis 6, wobei ein Wölbungsbetrag LC an den Außenkanten (7e) der Gürtellage (7) im Bereich von 2,5 % bis 12,5 % der maximalen Gürtelbreite WA liegt.

8. Luftreifen nach einem der Ansprüche 1 bis 7, wobei beide Schulterlandbereiche (9B) so konfiguriert sind, dass sie mit einer Ebene in Kontakt sind, wenn der Luftreifen (1) auf der Ebene mit einem Null-Wölbungswinkel platziert wird, indem er mit 50 % einer Standardreifenlast belastet wird.

**Revendications**

1. Bandage pneumatique (1) ayant une portion formant bande de roulement (2), dans lequel

la portion formant bande de roulement (2) inclut un caoutchouc de bande de roulement (2G) formant une surface de contact au sol (2s) et une couche de ceinture (7) disposée radialement à l'intérieur du caoutchouc de bande de roulement (2G) et ayant des bords extérieurs (7e) dans la direction axiale du pneumatique,

le bandage pneumatique (1) a un diamètre extérieur allant de 350 à 600 mm et est configuré de façon à pouvoir être monté sur une jante de pneumatique ayant une largeur de jante RW allant de 78 % à 99 % d'une largeur de section de pneumatique SW du bandage pneumatique (1),

la surface de contact au sol (2s) est divisée en une pluralité de régions en relief (9) par au moins deux rainures circonférentielles (8) s'étendant en continu et de façon linéaire dans une direction circonférentielle du pneumatique,

les régions en relief (9) incluent une paire de régions en relief d'épaulement (9B) situées chacune sur un côté respectif axialement le plus à l'extérieur,

chacune des régions en relief d'épaulement (9B) inclut un bord intérieur (9e) dans la direction axiale du pneumatique,

dans une moitié axiale du bandage pneumatique (1), le bord intérieur (9e) de la région en relief d'épaulement (9B) est situé axialement à l'intérieur du bord extérieur (7e) de la couche de ceinture (7),

dans une moitié axiale du bandage pneumatique (1), une distance LA dans la direction axiale du pneumatique entre le bord intérieur (9e) de la région en relief d'épaulement (9B) et le bord extérieur (7e) de la couche de ceinture (7) est dans la plage allant de 10 % à 30 % d'une largeur de ceinture maximum WA dans la direction axiale du pneumatique de la couche de ceinture (7),

LA étant une distance en millimètres entre le bord intérieur (9e) de la région en relief d'épaulement (9B) et le bord extérieur (7e) de la couche de ceinture (7) dans une moitié axiale du bandage pneumatique (1), et **caractérisé en ce que**

une dureté Hs du caoutchouc de bande de roulement (2G) satisfait à l'expression 1 suivante :

$$Hs \leq 75 - 20 \times \frac{LA}{SW} \cdots \quad \text{(expression 1)},$$

SW étant la largeur de section de pneumatique en millimètres et Hs étant mesurée par un duromètre de type A dans un environnement de 23 degrés Celsius selon la norme industrielle japonaise JIS-K6253 ;

la largeur de section de pneumatique SW est dans la plage allant de 145 à 285 mm ;

un rapport SH/SW d'une hauteur de section de pneumatique SH sur la largeur de section de pneumatique SW est dans la plage allant de 35 % à 75 %.

2.  Bandage pneumatique selon la revendication 1, dans lequel la portion formant bande de roulement (2) est dotée de deux à quatre rainures circonférentielles (8).

3.  Bandage pneumatique selon l'une quelconque des revendications 1 à 2, dans lequel la largeur de jante RW est de 9 pouces (soit environ 22,86 centimètres) ou moins.

4.  Bandage pneumatique selon l'une quelconque des revendications 1 à 3, dans lequel le bandage pneumatique (1) est configuré de façon à pouvoir être monté sur la jante de pneumatique ayant un diamètre de jante RD dans la plage allant de 10 à 18 pouces (soit de 25,40 cm environ à 45,72 cm environ).

5.  Bandage pneumatique selon l'une quelconque des revendications 1 à 4, dans lequel une distance LB dans la direction axiale du pneumatique entre les bords intérieurs (9e) des régions en relief d'épaulement (9B) est dans la plage allant de 25 % à 95 % de la largeur de ceinture maximum WA.

6.  Bandage pneumatique selon l'une quelconque des revendications 1 à 5, dans lequel la couche de ceinture (7) inclut une nappe de ceinture la plus à l'extérieur (7B) disposée le plus à l'extérieur dans la direction radiale du pneumatique, et

    une largeur de ceinture WB dans la direction axiale du pneumatique de la nappe de ceinture la plus à l'extérieur (7B) est dans la plage allant de 80 % à 100 % de la largeur de ceinture maximum WA.

7.  Bandage pneumatique selon l'une quelconque des revendications 1 à 6, dans lequel une valeur de cambrure LC au niveau des bords extérieurs (7e) de la couche de ceinture (7) est dans la plage allant de 2,5 % à 12,5 % de la largeur de ceinture maximum WA.

8.  Bandage pneumatique selon l'une quelconque des revendications 1 à 7, dans lequel les deux régions en relief

EP 4 559 698 B1

d'épaulement (9B) sont configurées pour être en contact avec un plan quand le bandage pneumatique (1) est placé sur le plan avec un angle de cambrure égal à zéro en étant chargé avec 50 % d'une charge de pneumatique standard.

# FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023198537 A
- JP 2023102627 A
- DE 112022000645 T5
- JP 2022153347 A